# EUROPÄISCHE PATENTSCHRIFT

(11) **EP 0 642 459 B1**
(45) Veröffentlichungstag und Bekanntmachung des Hinweises auf die Patenterteilung: **24.01.1996**
(21) Anmeldenummer: 93912806.2
(22) Anmeldetag: 27.05.1993
(51) Int. Cl.: B65G 47/36, B65G 47/61

(54) **HÄNGEFÖRDERVORRICHTUNG MIT GUT-ÜBERNAHMEEINRICHTUNG**
SUSPENDED CONVEYOR WITH GOODS RECEPTION DEVICE
DISPOSITIF DE CONVOYAGE SUSPENDU MUNI D'UN DISPOSITIF DE RECEPTION DES PRODUITS

(30) Priorität: 27.05.1992 DE 9207217 U
(43) Veröffentlichungstag der Anmeldung: 15.03.1995
(73) Patentinhaber: GÄRTNER, Franz, D-97656 Unterelsbach (DE)
(72) Erfinder: GÄRTNER, Franz, D-97656 Unterelsbach (DE)
(74) Vertreter: Patentanwälte Dr. Solf & Zapf
(86) Internationale Anmeldenummer: EP9301333
(87) Internationale Veröffentlichungsnummer: WO9324398

(56) Entgegenhaltungen:
- DE-A- 3 935 487
- DE-C- 3 807 280
- DE-C- 3 934 995
- US-A- 3 982 623

## Beschreibung

Die Erfindung betrifft eine Hängefördervorrichtung zur Hängeförderung von an Haken hängendem Gut, insbesondere von auf Kleiderbügeln Hangenden Bekleidungsstücken, mit an einer Schiene hängenden, entlang der Schiene transportierten Trolleys, die von den Haken übergriffene Tragstangen aufweisen, mit wenigstens einer Abwurfstange abfallenden Verlaufs, die mit ihrem oberen Ende seitlich an die Bewegungsbahn der Trolley-Tragstangen angrenzt und über die das Gut unter Einfluß der Schwerkraft abrutscht, und mit einer Übernahmeeinrichtung zur Übernahme des Guts von den transportierten Trolleys, die einen Übernahmefinger umfaßt, der am oberen Ende der Abwurfstange angeordnet ist, in einer Gut-Übernahmestellung an die Tragstange des jeweils in einer Übregabeposition befindlichen Trolleys, die Haken untergreifend, anstellbar ist und einen ansteigenden Rampenabschnitt so aufweist, daß auf diesen auflaufende Haken von der Tragstange frei kommen.

Bei einer derartigen Hängefördervorrichtung werden Bekleidungsstücke an bestimmten Stellen an Abwurfstangen übergeben. Die Übergabe von der Schiene bzw. Verteilerbahn zu den jeweiligen Abwurfstangen erfolgt dabei mit einer Übernahmevorrichtung. Auf den Abwurfstangen, die eine Gefällestrecke aufweisen, rutscht das Gut z.B. zu einem tiefer gelegenen Stangenabschnitt, der z.B. eine Stauzone sein kann, oder es erfolgt eine Weiterleitung an eine andere Verteilerbahn.

Der Transport des an Haken hängenden Guts erfolgt mittels Trolleys, deren Tragstangen zur Aufnahme einer Reihe von beispielsweise auf Kleiderbügeln hängenden Bekleidungsstücken ausgelegt sind, wobei die Abwurfstangen mit ihren Übernahmeeinrichtungen mit der Tragstange der Trolleys zusammenwirken, so daß das Gut störungsfrei übergeben werden kann.

Eine Hängefördervorrichtung der eingangs genannten Art ist aus der DE 38 07 280 C1 bekannt. Bei dieser bekannten Vorrichtung ist der Finger der Übernahmeeinrichtung als eine gerade Fortsetzung der Tragstange einstückig mit dieser ausgebildet. Ferner umfaßt die Übernahmeeinrichtung einen Schleppförderer, der in paralleler Ausrichtung zu dem Finger verfahrbar ist, die an der Fingerspitze durch die kontinuierliche Transportbewegung der Trolleys kommenden Haken der Kleiderbügel erfaßt und über den ansteigenden Rampenabschnitt des Fingers auf die abfallende Strecke der Abwurf stange überführt. Der Finger der Übernahmeeinrichtung befindet sich bei dieser Vorrichtung stets in einer Anordnung unmittelbar anschließend an die Bewegungsbahn der Trolley-Tragstangen, so daß diese Übernahmeeinrichtung nur für spezielle Trolleys eingesetzt werden kann, die keine seitlich überstehenden endseitigen Anschlußeinrichtungen, wie beispielsweise Kupplungsteile, aufweisen.

Eine Fortbildung dieser bekannten Hängefördervorrichtungen ist in der DE 39 34 995 C1 beschrieben. Demnach ist der mit dem Finger zusammenwirkende Übernahmeförderer in Gestalt eines Schnekkenförderers zusammen mit der Abwurfstange und dem daran fest angeschlossenen Finger seitlich aus der Bewegungsbahn der Trolley-Tragstangen herausschwenkbar, so daß auch Trolleys mit endseitig vorgesehenen, seitlich überstehenden Kupplungsteilen verwendet werden können.

Die Übernahmeeinrichtungen dieser beiden Hängefördervorrichtungen sind aufwendig aufgebaut und/oder auf bestimmte Trolley-Ausführungen beschränkt sowie nur für eine relativ kleine Fördergeschwindigkeit geeignet.

Die Aufgabe der vorliegenden Erfindung besteht darin, eine Hängefördervorrichtung der eingangs genannten Art zu schaffen, die bei einfachem Aufbau ihrer Übernahmeeinrichtung eine an eine hohe Förderleistung angepaßte Übernahme störungsfrei gewährleistet.

Gelöst wird diese Aufgabe durch die Merkmale des Anspruchs 1. Vorteilhafte Weiterbildungen der Erfindung sind in den Unteransprüchen gekennzeichnet.

Erfindungsgemäß ist die Übernahmeeinrichtung als trolleystangenseitiges Anschlußteil der mit Gefälle angeordneten Abwurf stange ausgebildet. Das Anschlußteil ist um die Längsachse der Abwurfstange drehbar angeordnet und weist endseitig einen gekrümmten Finger auf. Durch Drehung des Anschlußteils ist der Finger verstellbar zwischen einer Anlage an der Trolley-Stange und einer Position seitlich neben der Trolley-Stange. Die Krümmung des Fingers ist so gewählt, daß die Fingerspitze bei an der Trolley-Stange anliegendem Finger unter dem Zenit der Fingerkrümmung liegt. Die kontinuierliche, aufgezwungene Bewegung des Trolleys drückt die Bügelhaken über die Fingerkrümmung, so daß die Haken von der Trolley-Stange abgezogen werden und bis auf den oder die letzten Haken über die Tragstange abrutschen. Der oder die letzten Haken werden dadurch von der Trolley-Tragstange abgehoben, daß die Fingerspitze durch Verschwenken des Anschlußteils eine Position über dem Zenit der Fingerkrümmung einnimmt, so daß auch diese letzten Haken sehr sicher vom Trolley abgenommen werden, wobei der Finger aus dem Bereich seitlich überstehender Elemente des Trolleys geschwenkt ist.

Die erfindungsgemäß ausgebildete Übernahmeeinrichtung zeichnet sich durch einen einfachen Aufbau aus. Wesentlich für eine verzögerungsfreie und störungsfreie Arbeitsweise bei kontinuierlichem Transport der Trolleys ist, daß die Übernahmeeinrichtung zwischen ihren beiden Stellungen, der Gutabnahmestellung und der Bereitschaftsstellung, in einfacher Weise und sehr schnell durch eine Drehbewegung um die Längsachse der Abwurfstange umgesteuert werden kann, so daß der Übernahmevorgang die kontinuierliche Transportbewegung der Hängefördervorrichtung nicht beeinträchtigt.

Nachfolgend wird die Erfindung anhand der Zeichnung beispielhaft näher erläutert. Es zeigen:
Fig. 1 eine Seitenansicht eines Gefällestreckenabschnitts der erfindungsgemäßen Hängefördervorrichtung;
Fig. 2 eine Detailansicht der Hängefördervorrichtung von Fig. 1 im Bereich ihrer Übernahmeeinrichtung und
Fig. 3 eine Ansicht des Details von Fig. 2 in Förderrichtung der Verteilerbahn gesehen;
Fig. 4 eine abgewandelte Ausführungsform der erfindungsgemäß ausgebildeten Übernahmeeinrichtung in ihrer Gut-Abnahmestellung in Seitenansicht;
Fig. 5 die Anordnung von Fig. 4 mit in Bereitschaftsstellung geschwenkter Übernahmeeinrichtung in Seitenansicht;
Fig. 6 eine Darstellung des Fingers der erfindungsgemäßen Übernahmeeinrichtung an der Tragestange des Trolleys vor Erfassung der Haken, an denen das Gut hängt, in Draufsicht;
Fig. 7 Trolley und Übernahmeeinrichtung in einer Position, in der der Finger der Übernahmeeinrichtung eine Trolley-Aufhängeeinrichtung mit der Fingerspitze seitlich umgreift, in Draufsicht.
Eine erste Ausführungsform der erfindungsgemäßen Hängefördervorrichtung ist in den Fig. 1 bis 3 gezeigt.

Die Hängefördervorrichtung 1 hat einen Gefällestreckenabschnitt 4 zur Förderung von an Haken hängendem Gut in Richtung des Pfeils 3. Ein Gefällestreckenabschnitt ist aber nicht erforderlich. Die Vorrichtung umfaßt eine Verteilerbahn 2, die als Profilschiene ausgebildet ist. Die Verteilerbahn 2 weist zwei im Querschnitt quadratische, übereinander angeordnete, hohle Schienen 9 und 10 auf, die hochkant ausgerichtet sind. Die obere Schiene 10 ist mit ihrer unteren Kante mit der oberen Kante der unteren Schiene 9 vorzugsweise durch Verschweißung verbunden. Die Verteilerbahn 2 ist mit einer Trageinrichtung aufgehängt, die bandförmige Träger 7 umfaßt, die z.B. mit der oberen Schiene 10 der Verteilerbahn 2 und der Decke eines Raumes fest verbunden sind.

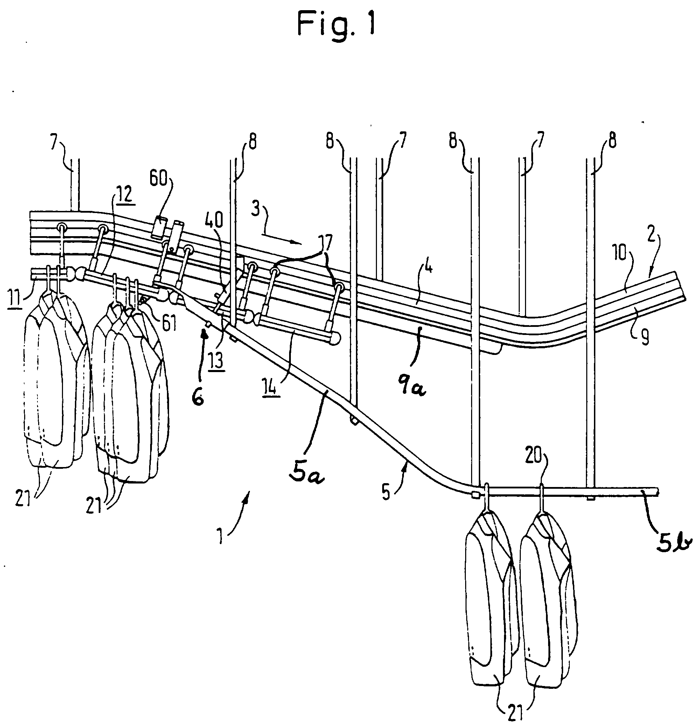

Die Verteilerbahn 2 bildet die Transportstrecke für Trolleys 11 bis 14. Im dargestellten Ausführungsbeispiel sind sämtliche Trolleys 11 bis 14 gleich aufgebaut. Jeder Trolley 11 bis 14 weist eine Tragstange 15 auf. Die Stange 15 ist ein Hohlrohr quadratischen Querschnitts und besteht beispielsweise aus Aluminium. Endseitig ist die Tragstange 15 durch Kappen 15a abgeschlossen, die auf den Stangenenden sitzen und Kupplungselemente bilden, über die unmittelbar aneinander stoßende Trolleys, wie in Fig. 1 gezeigt, miteinander gekuppelt sind. Außerdem weist jeder Trolley 11 bis 14 Aufhängungsmittel auf, über die die Tragstangen 15 an der Schiene 9 der Verteilerbahn 2 aufgehängt sind. Die Aufhängungsmittel umfassen pro Trolley z.B. zwei Schrauben federn 16, die mit der Trolley-Tragstange 15 im Bereich der endseitig vorgesehenen Kappen 15a fest verbunden sind. Die beiden Federn 16 verlaufen senkrecht zur Längsachse der Tragstange 15 und sind im Bereich der unteren Kante der hochkant ausgerichteten Stange 15 an dieser angebunden. Das obere Ende jeder Feder 16 ist mit einem Bügel 16a verbunden, der so ausgerichtet ist, daß er in einer Ebene liegt, die senkrecht verläuft zur Längserstreckung der Schiene 9. Der Bügel 16a weist obere freie Bügelenden auf, an denen Rollen 17 um diese Bügelenden drehbar gelagert sind. Die Rollen 17 stehen in Eingriff mit den beiden dachförmig verlaufenden oberen Seitenflächen der Tragschiene 9 und gewährleisten dadurch einen Rolltransport der Trolleys 11 bis 14 auf der Schiene 9 der Verteilerbahn 2. Bewirkt wird der Rolltransport durch eine endlos umlaufende, angetriebene Kette, die in einem Gehäuse 9a angeordnet ist, das an der Unterseite der Schiene 9 befestigt ist. Die Förderkette läuft formschlüssig geführt in dem Gehäuse 9a parallel zu den Schienen 9,10, wobei ein Stift 16b, der am oberen Ende der Schrauben feder 16 befestigt ist, durch einen Gehäuseschlitz in Löcher der Kette eingreift. Ein derartiges Hängefördersystem wird z.B. in der DE 35 10 955 Al beschrieben.

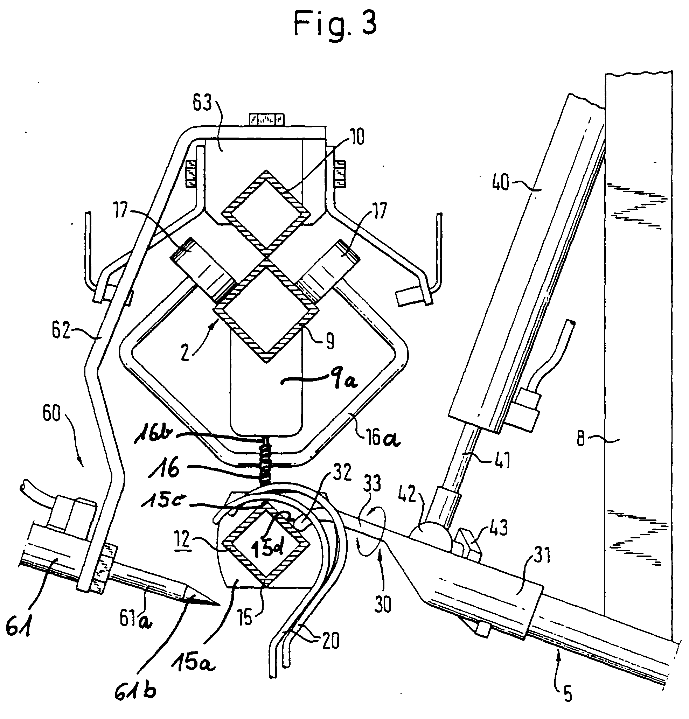

Die Trolleys bilden das Transportmittel für das mit der Hängefördervorrichtung 1 zu fördernde an Haken hängende Gut. Dargestellt sind als zu förderndes Gut Bekleidungsstücke, nämlich Jacketts 21, von denen vorzugsweise mehrere von jedem Trolley 11 bis 14 getragen werden. Aufgehängt sind die Bekleidungsstücke 21 an den Tragstangen 15 der Trolleys 11, 12 mittels Kleiderbügeln, die in bekannter Weise Haken 20 aufweisen, die, wie in Fig. 3 gezeigt, die obenliegende Längskante 15c der Trolleystange 15 übergreifen.

Die bekannte Hängefördervorrichtung 1 ist kombiniert mit einer Übernahmeeinrichtung, mit der Bekleidungsstücke 21 von den Trolleys 11 bis 14 abgenommen und abtransportiert werden können. Diese Einrichtung umfaßt eine vorzugsweise kreiszylindrische Abwurfstange 5, die über bandförmige Träger 8 an der weiter nicht dargestellten Tragkonstruktion der Hängevorrichtung 1 aufgehängt ist. Die Träger 8 sind im wesentlichen in gleichen Abständen entlang der Abwurfstange 5 angeordnet und mit dieser seitlich derart fest verbunden, daß Haken 20 auf der obenliegenden Mantellinie der Stange 5 störungsfrei abrutschen können. Die Abwurfstange 5 ist z.B. an der Gefällestrecke 4 der Verteilerbahn 2 angeordnet und umfaßt einen verteilerbahnseitigen, ebenfalls abfallenden Abschnitt 5a, der an seinem unteren Ende in einen waagrecht verlaufenden Abschnitt 5b übergeht.

Am verteilerbahnseitigen Abschnitt 5a der Abwurfstange 5 ist die erfindungsgemäß ausgebildete Übernahmeinrichtung 6 angeordnet, die dazu dient, gesteuert Bekleidungsstücke 21 von z.B. dem Trolley 12 abzunehmen, der sich in Höhe der Übernahmeeinrichtung 6 befindet, und an die Abwurfstange 5 weiterzuleiten.

Erfindungsgemäß ist die Übernahmeeinrichtung 6 als Fortsatz der Abwurf stange 5 ausgebildet. Dieser Fortsatz weist ein kreiszylindrisches hülsenförmiges Anschlußteil 31 auf, das um die Längsachse des Abwurfstangenendes 5a drehbar auf dem verteilerbahnseitigen Ende 5a der Abwurfstange 5 in nicht dargestellter Weise gelagert ist. Für die Drehlagerung eignen sich beispielsweise Wälz- bzw. Kugellager, die zwischen der Innenwandung der Hülse 31 und der Außenwandung des Abwurfstangenendabschnitts angeordnet sind. In Verlängerung der obenliegenden Mantellinie 31a der Hülse 31 in Richtung auf die Verteilerbahn 2 bzw. den dort befindlichen Trolley 12 weist die Übernahmeeinrichtung 6 einen einstückig mit der Hülse 31 verbundenen Finger 30 auf, der anschließend an der Hülse 31 einen geradlinig entlang ihrer oberen Mantellinie 31a verlaufenden Fingerabschnitt 33 sowie eine verrundete Fingerspitze 32 aufweist. Zwischen der Fingerspitze 32 und dem geradlinigen Fingerabschnitt verläuft der Finger 30 gebogen bzw. gekrümmt. Der Zweck des Fingerbogens 34 wird nachfolgend beschrieben. Die Fingerspitze 32 liegt seitlich neben der Drehachse der Hülse 31 und wird daher bei einer Drehung der Hülse 31 exzentrisch Verschwenkt.

Zur Drehverstellung der Übernahmeeinrichtung 6 ist eine Zylinderkolben-Anordnung 40 vorgesehen, die vorzugsweise hydraulisch angetrieben ist. Die Kolbenzylinder-Anordnung 40 ist quer zur Abwurfstange 5 zwischen dieser und der Verteilerschiene 2 angeordnet und ist am abwurfstangenseitigen Ende gelenkig mit der Hülse 31 verbunden. Eine Kolbenstange 41 der Anordnung 40 ist über ein kugelgelenk 42 an die Hülse 31 angeschlossen. Das Kugelgelenk 42 besteht aus einem hohlkugelförmigen Kalottenteil 44, das fest mit der Kolbenstange 41 verbunden ist und aus einer in dem Kalottenteil 44 formschlüssig angeordneten Kugel, die fest mit einem Schaft 45 verbunden ist, der seinerseits fest verbunden ist mit einem plattenförmigen Flansch 43, der seitlich von der Hülse 31 absteht, in einer Radialebene derselben liegt und fest mit ihr verbunden ist. Durch das Ein- und Ausziehen der Kolbenstange 41 bei Betätigung der Kolbenzylinder-Anordnung 40 wird die lineare hin- und hergehende Bewegung der Kolbenstange 41 über das Kugelgelenk 42 und den Flansch 43 in eine Drehbewegung der Hülse 31 um ihre Mittenlängsachse bzw. die Mittenlängsachse der Abwurfstange 5 umgewandelt.

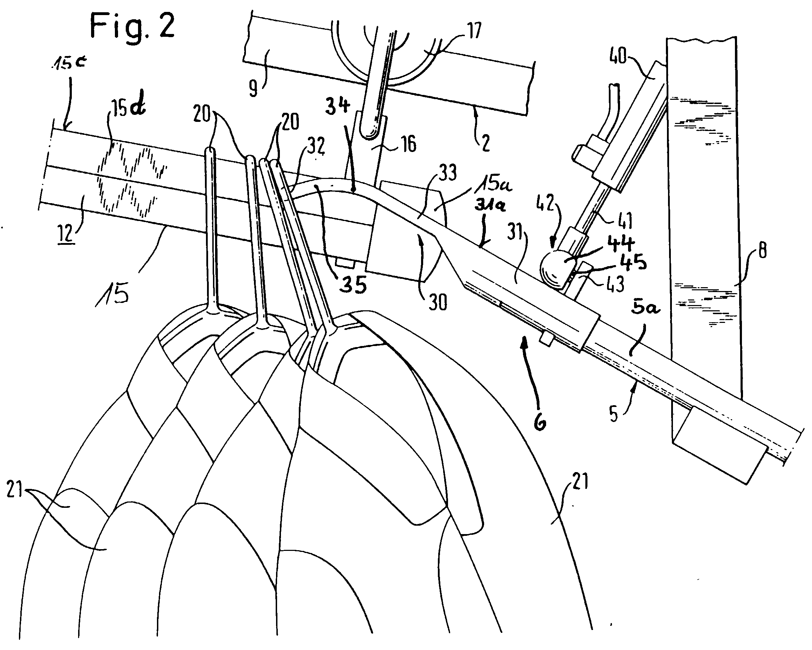

Die Hülse 31 der Übernahmeeinrichtung 6 ist zwischen zwei Endstellungen drehverstellbar, nämlich zwischen einer Stellung, in welcher die Spitze 32 des Fingers 30 unter seitlichem Abstand zur Tragstange 15 des an der Übernahmeeinrichtung 6 angeordneten Trolleys 12 zu liegen kommt (Fig. 1) und einer Gut-Übernahmestellung, in der die Fingerspitze 32 an der obenliegenden Seitenfläche 15b der Tragstange 15 anliegt, die der Finger-spitze gegenüberliegt (Fig. 2, 3). In der letztgenannten Stellung verläuft der gebogene Fingerabschnitt 34 derart, daß der zwischen der Fingerspitze 32 und dem Zenith des Krümmungsabschnitts 34 liegende Fingerabschnitt 35 nach Art einer Rampe eine ansteigende und von der Tragstange 15 wegführende Auflaufbahn für die Kleiderbügel 20 bildet. Die Fingerspitze 32 liegt dabei unterhalb der Kulmination der Krümmung des Fingers 30. Der Rampenabschnitt 35 verläuft seitlich gewinkelt zur Fläche 15d der Tragstange 15 derart, daß ein über die Fingerspitze 32 auf den Finger 30 aufgrund der Transportbewegung der Tragstange 15 in Richtung des Pfeils 3 und Einwirkung nachfolgender Haken auflaufender Kleiderhaken 20 (Fig. 2) angehoben wird, bis das freie Ende des Hakens 20 über der obenliegenden Längskante 15c der Tragstange 15 rutscht. Da der Finger 30 und damit der Rampenabschnitt 35 außerdem seitlich abgewinkelt zur Tragstangenfläche 15d verläuft, wird der Haken nicht nur angehoben, sondern, wie in Fig. 3 gezeigt, auch seitlich von der Tragstange 15 weggezogen, so daß er vollständig freikommt von der Tragstange 15 und durch nachfolgende Haken über den Zenit der Fingerkrümmung auf den abfallenden Fingerabschnitt 33 geschoben wird, von wo er über die Hülse 31 auf die Abwurfstange 5 rutscht. Die nachfolgenden Haken werden ebenso abgehebelt durch den Finger 30, wobei für die letzten Haken, insbesondere für den in Trolley-Transportrichtung letzten Haken kein diesen Haken über die Rampe der Fingerkrümmung schiebender Staudruck nachfolgender Haken vorhanden ist. Diese letzten Haken werden durch das Verschwenken des Fingers 30 in seine tragstangenferne Position von der Tragstange abgehoben, indem die Fingerspitze 32 nach oben bis über die Kulmination der Fingerkrümmung 34 schwenkt. Dadurch wird auch der letzte Haken 20 nach oben über die obere Längskante 15c der Tragstange 15 angehoben und seitlich von der Tragstange 15 abgezogen und kann selbsttätig weiter nach unten rutschen. Sobald die weggeschwenkte Endposition des Fingers 30 erreicht ist, liegt die Fingerspitze 32 über dem Zenith der Fingerkrümmung 34, so daß sämtliche vom Finger 30 über die jeweiligen Kleiderhaken 20 getragenen Bekleidungsstücke 21 durch Schwerkrafteinwirkung zum Anschlußteil 31 der Übernahmeeinrichtung 6 und darauffolgend auf die Abwurfstange 5 rutschen. Während des Heruntergleitens der Bekleidungsstücke 21 von der Abwurfstange 5 ist der entladene Trolley 12 in die Position des Trolleys 13 von Fig. 1 überführt, und der nachfolgende Trolley 11 hat die Entladestellung gegenüber der Übernahmeeinrichtung 6 eingenommen. Der aus den Trolleys 11, 12, 13, 14 bestehende, gekuppelte Trolleyzug wird kontinuierlich transportiert, wobei die Übernahme entsprechend kontinuierlich erfolgt.

Die erfindungsgemäße Hängefördervorrichtung 1 umfaßt ferner eine auf der oberen Schiene 10 der Verteilerbahn 2 reitende und dort festsetzbare Gut-Staueinrichtung 60. Die Staueinrichtung 60 weist einen Schlitten 63 auf, der auf der oberen Verteilerbahnschiene 10 reitet, und an dem ein Tragarm 62 befestigt ist, der sich seitlich nach unten, die Aufhängungsmittel 16, 17 für die Trolleys 11 bis 14 mit Abstand seitlich umgreifend, erstreckt. Am unteren Ende des Tragarms 62 ist eine Kolbenzylinder-Anordnung 61 befestigt, die bevorzugt hydraulisch betätigt wird. Die Kolbenstange 61a der Kolbenzylinder-Anordnung 61 ist am freien Ende mit einer Spitze 61b ausgebildet und erstreckt sich quer zur Verteilerbahn 2 und damit quer zu den Tragstangen 15 der Trolleys 11 bis 14. Die Anordnung der Kolbenstange 61a ist derart, daß sie auch in ausgefahrener Position die Bewegung des Trolleys nicht behindert. Zu diesem Zweck liegt die Kolbenstange 61a unterhalb der unteren Längskante der Tragstange des sich in der Übergabeposition befindenden Trolleys 12.

In Fig. 3 ist die zurückgezogene Stellung der Kolbenstange 61a gezeigt, in der die Spitze 61b der Kolbenstange 61a mit seitlichem Abstand zu den bügelseitigen Enden der Kleiderhaken 20 liegt. Die Kolbenstange 61a ist bei Betätigung der Kolbenzylinder-Anordnung soweit ausfahrbar, daß sie in den Bereich der bügelseitigen Hakenstege gelangt und dadurch den auf Höhe der Spitze 61b liegenden Haken 20 sowie die nachfolgenden Kleiderhaken während des Transports des Trolleys zurückhält.

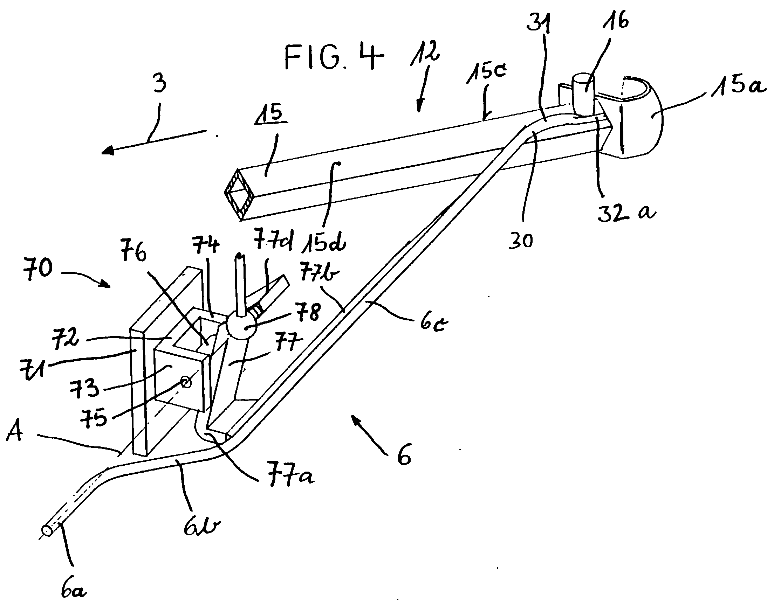

Eine weitere Ausführungsform der erfindungsgemäß ausgebildeten Übernahmeeinrichtung ist in den Fig. 4 bis 7 zusammen mit dem an der Übernahmeeinrichtung angeordneten Trolley gezeigt. Auch diese Übernahmeeinrichtung kann Bestandteil der im übrigen in den Fig. 1 bis 3 gezeigten Hängefördervorrichtung sein. Soweit diese Übergabeeinrichtung und der dargestellte Trolley übereinstimmen mit der Übergabeeinrichtung und dem Trolley gemäß den Fig. 1 bis 3, sind dieselben Bezugszeichen verwendet.

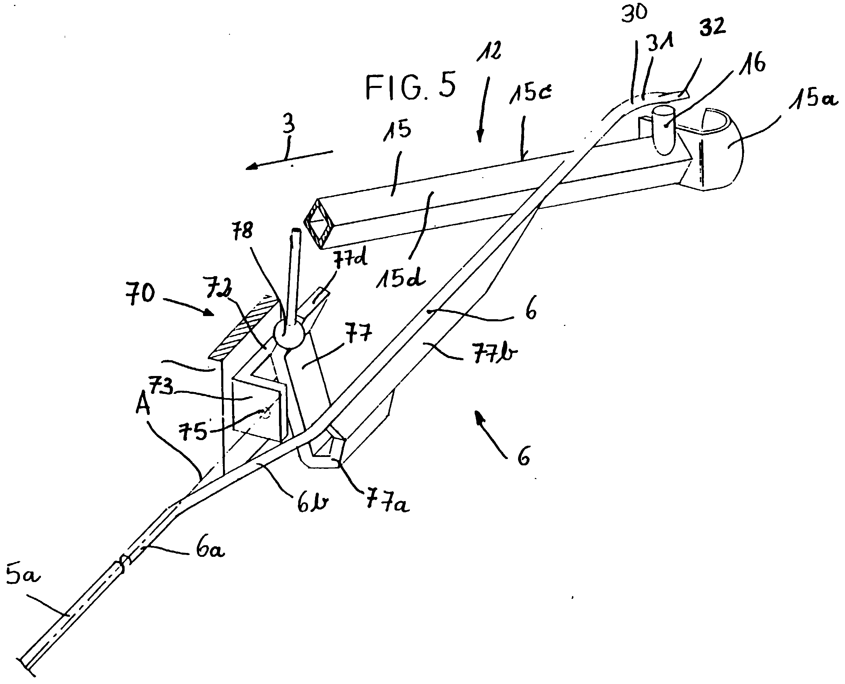

Die Transportrichtung des in den Fig. 4 bis 7 nur mit dem Tragstangenbereich gezeigten Trolleys 12 ist durch den Pfeil 3 angedeutet. Der Trolley 12 befindet sich an der Übernahmestation der Übernahmeeinrichtung 6. Die Übernahmeeinrichtung 6 ist als vertei-lerbahnseitiger Fortsatz der Abwurfstange bzw. des in Fig. 5 gezeigten Abwurfstangenendes 5a ausgebildet. Die Übernahmeeinrichtung 6 weist einen mit der Abwurfstange 5a fluchtenden geraden Abschnitt 6a auf, ein von diesem geraden Abschnitt 6a seitlich abgebogenen, gerade verlaufenden kurzen Abschnitt 6b, einen längeren gerade verlaufenden mittleren Abschnitt 6c, der sich an den abgebogenen Absschnitt 6b anschließt und in einen gekrümmten Finger 30 ausläuft. Der mittlere Stangenabschnitt 6c verläuft parallel zum abwurfstangenseitigen Stangenabschnitt 6a bzw. zum Abwurfstagenende 5a und damit zur gemeinsamen Mittenlängsachse A der Teile 6a und 5a sowie seitlich versetzt zu der Achse A. Der mittlere Abschnitt 6c der Übernahmeeinrichtung 6 verläuft, wie in Fig. 7 gezeigt, schräg unter einem Winkel α zu der Tragstange 1& des Trolleys 12 sowie, wie in den Fig. 4 und 5 gezeigt, vom Trolley 12 ausgehend, schräg nach unten abfallend.

Die Übernahmeeinrichtung 6 ist um die Achse A schwenkbar gelagert. Zu diesem Zweck ist ein Schwenklager 70 vorgesehen, dessen Schwenkachse mit der Achse A fluchtet. Das Schwenklager 70 sitzt in Verlängerung des geraden Übernahmestangenabschnitts 6a auf der Höhe des Endes des geraden Stangenabschnitts 6c, das in den Übergangsabschnitt 6b übergeht. Das Lager 70 weist eine ortsfeste Platte 71 auf, an der ein U-förmiges Lagerelement 72 mit seiner Basis, beispielsweise durch Schweißen derart ausgerichtet befestigt ist, daß die beiden Schenkel 73 und 74 des Lagerelements 72- zu dem mitt-leren Übernahmestangenabschnitt weisen und in etwa jeweils zentral von der Achse A durchsetzt werden. In mit der Achse A fluchtenden Bohrungen der Schenkel 73 und 74 ist eine Welle 75 fest eingesetzt. Auf der Welle 75 sitzt drehbar eine Buchse 76, mit der ein L-förmiges Verbindungswinkeleisen 77 beispielsweise durch Schweißen fest verbunden ist. Das untenliegende Ende 77a des als Hebel wirkenden Verbindungselements 77 ist in etwa U-förmig nach oben umgebogen und mit einem Blechlappen 77b fest verbunden bzw. einstückig mit diesem Lappen 77b ausgebildet, der parallel zum mittleren Übernahmestangenabschnitt 6c verläuft und mit diesem beispielsweise durch Schweißen fest verbunden ist. Am oberen Ende ist das L-förmige Verbindungselement 77 in Richtung auf den Lappen 77b unter einem flachen Winkel abgebogen. Seitlich an diesem abgebogenen Endabschnitt 77d ist die Kugel eines Kugelgelenks 78, ähnlich dem Kugelgelenk 42 von Fig. 2, fest angebracht. Im übrigen ist das Kugelgelenk 78, wie in Fig. 2 gezeigt, fest mit der Kolbenstange 79 einer Kolbenzylinder-Anordnung verbunden. Die lineare Hubbewegung der Kolbenstange 79 wird durch die Anlenkung der Kolbenstange.79 über das Kugelgelenk 78 auf das Verbindungselement 77 übertragen, so daß der mittlere Übernahmestangenabschnitt 6c eine Schwenkbewegung auf einer Kreiszylinderbahn ausführt, deren Mittenlängsachse die Achse A ist.

Durch diese Schwenkbewegung wird der als einstückiger Fortsatz des Übernahmestangenabschnitts 6c ausgebildete Finger 30 zwischen einer, in Fig. 5 gezeigten, trolleystangenfernen Position und einer Position verschwenkt, in der der Finger 30 an der obenliegenden Seitenwand 15d der Trolleytragstange 15 anliegt (siehe Fig. 4, 6 und 7).

Der Finger 30 besteht anschließend an den mittleren Übernahmestangenabschnitt 6c aus einem gebogen verlaufenden Abschnitt 31a sowie aus einem sich daran anschließenden Spitzenabschnitt 32a, der schnabelförmig vom gebogenen Abschnitt 31a nach unten und vorne absteht. Der Trolleystange 15 gegenüberliegend ist der Schnabelendbereich bzw. der Fingerspitzenabschnitt 32a ebenso abgeflacht ausgebildet wie ein sich daran anschließender Teil des gekrümmten Abschnitts 31a. Die dadurch gebildete gemeinsame glatte Oberfläche im Fingerspitzenbereich liegt flächig auf der schräg zur Seite abfallenden oberen Tragestangenseitenfläche 15d auf, wenn die Übernahmeeinrichtung 6 ihre Schwenkposition einnimmt, in der der Finger 30 an der Trolleystange 15 anliegt. Dadurch, daß der Schnabel 32a seitlich versetzt zur Drehachse A liegt, wird er bei einer Drehung der stangenförmigen Übernahmeeinrichtung 6 exzentrisch verschwenkt.

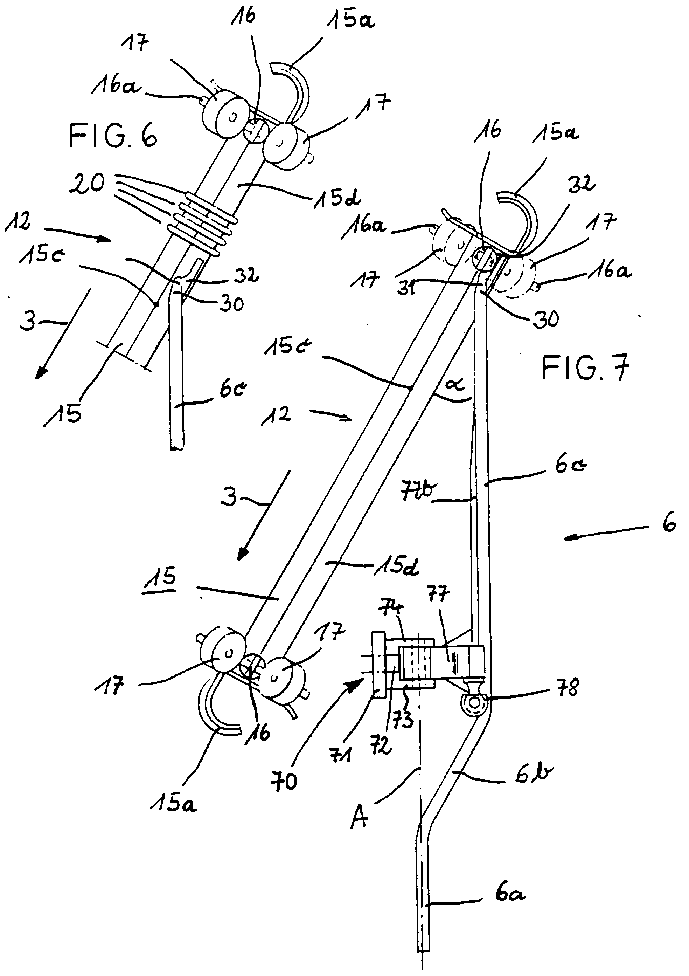

Wie aus Fig. 6 hervorgeht, steht der Schnabel 32a seitlich versetzt ab von dem Finger 30 und ist seitlich so ausgenommen, daß er in seiner in Fig. 7 gezeigten Position ein Stück seitlich an der Feder 16 vorbeipaßt.

Die Abnahme und Übernahme von Gut, das an Kleiderbügeln mit Kleiderhaken 20 an der Trolleystange 15 hängt, erfolgt, indem - wie in Fig. 6 gezeigt - das Schnabelende der Übernahmstange 6 in Anlage an die obere Seitenfläche 15d der Trolleytragstange 15 geschwenkt wird. Bei Weiterbewegung des Trolleys 15 in Richtung des Pfeils 3 untergreift zunächst der Schnabel 32 die vier Haken 20, die auf den gebogenen Fingerabschnitt 31 auflaufen, der so gebogen ist, daß er für die Haken 20 eine ansteigende Rampe bildet, die zudem abgewinkelt zur Tragstangenfläche 15d verläuft, so daß die auflaufenden Haken 20 durch die nachfolgenden Haken und die Relativbewegung der Trolleystange 15 zum Schnabel 32 nicht nur angehoben, sondern auch seitlich in seiner Lage zur Tragstange 15 so versetzt wird, daß er vollständig frei kommt von der Tragstange 15 und durch die nachfolgenden Haken über den Zenit der Fingerkrümmung auf den abfallenden Stangenabschnitt 6c geschoben wird, von wo er über die Stangenabschnitte 6b und 6a auf die Abwurfstange 5 rutscht. Sobald der in Laufrichtung am weitesten hinten gelegene Haken 20 an der Feder 16 des Tragstangenhalterungsmittels in Anlage kommt, weil sich zwischenzeitlich der Trolley 12 in Pfeilrichtung 3 entsprechend weiterbewegt hat, wird er gegebenenfalls zusammen mit vor ihm liegenden, noch nicht von der Tragstange 12 frei gekommenen Haken auf den eine Rampe bildenden gebogenen Abschnitt 31 des Fingers 30 hinaufgeschoben, wobei dann zumindest der am weitesten vorne liegende Haken 20 bereits von der obenliegenden Längskante 15c der Tragestange 15 frei kommt, weil die Kulmination des Bogens bzw. der Zenit der Fingerkrümmung höher liegt als die Längskante 15c. Sobald der Schnabel 32 die in Fig. 7 gezeigte Position seitlich der Feder 16 einnimmt, wird auch der letzte, sich unmittelbar vor der Feder befindende Haken 20 auf den Rampenabschnitt 31 geschoben und kommt spätestens dann von der obenliegenden Kante 15c der Tragstange 15 frei, wenn die Übernahmestange 6 ihre Schwenkbewegung in Richtung auf die trolleystangenferne Position aufnimmt, die in Fig. 5 dargestellt ist und in der die Fingerspitze über dem Zenit der Fingerkrümmung liegt. Bei dieser Schwenkbewegung steigt das freie Ende des Schnabels 32a über den Zenith des gekrümmten Fingerabschnitts 31a, wodurch auch der letzte Haken 20 vollständig von der Tragstange 15 freikommt und ohne Antrieb die schräg abfallende Übernahmestange 6 hinunter auf die Abwurfstange 5 gleitet.

Indem in beiden beispielhaft dargestellten Ausführungsformen bei der Aufnahme des letzten Bügels eine Schwenkbewegung ausgeführt wird, gelangt die Finger- bzw. Schnabelspitze in eine höhere Position als die höchste Rampenbogenhöhe, so daß der letzte Bügel ohne weiteres abgleiten kann. Die vorangehenden Bügel werden jeweils von deren nachfolgenden Bügeln auf die Rampe gedrängt. Probleme bereitete bei den bekannten Einrichtungen nur der letzte Bügel, weil die Hängeeinrichtung - z.B. in Form der Feder 16 stört - und ein sicheres Erfassen des letzten Bügels stören kann. Die Erfindung löst dieses Problem durch die besondere Fingerform bzw. Schnabelform, die es ermöglichen, den Finger solange an der Tragstange zu belassen, bis die Hängeeinrichtung die Fingerspitze erreicht hat; im Falle der Schnabelform kann die Hängeeinrichtung die Schnabelspitze sogar ein Stück überfahren. Für das Abschwenken, bei dem der letzte Bügel zum selbsttätigen Abrutschen aufgrund der von der Finger- bzw. Schnabelspitze gebildeten Schräge gebracht wird, und das Wiederherausschwenken wird Zeit gewonnen durch die Staueinrichtung 60, die den ersten und die folgenden Bügel des nachfolgenden Trolleys des kontinuierlich fahrenden Trolleyzuges solange zurückhält, bis der Finger bzw. der Schnabel an die Tragstange des nachfolgenden Trolleys herangeschwenkt ist. Das Abschwenken erfolgt aber nicht nur, weil der letzte Bügel zum Abrutschen gebracht werden muß, sondern auch damit der Finger bzw. der Schnabel nicht gegen die Hängeeinrichtung 16 und die Kupplungseinrichtung 15a des fahrenden Trolleyzuges stößt. Erst wenn diese Einrichtungen vorbeigelaufen sind, kann wieder herumgeschwenkt werden und solange müssen auch die Bügel des nachfolgenden Trolleys zurückgehalten bzw. gestaut werden, denn das Herausschwenken erfordert eine bügelfreie Stelle auf der Tragstange. Die Erfindung löst diese Probleme mit verblüffend einfachen Mitteln, nämlich der besonderen Finger- bzw. Schnabelform, sowie dem Wegschwenken der Übernahmestange und dem zeitweisen Zurückhalten der Bügel des nachfolgenden Trolleys.

## Patentansprüche

1. Hängefördervorrichtung zur Hänge förderung von an Haken hängendem Gut, insbesondere von auf Kleiderbügeln hängenden Bekleidungsstücken, mit an einer Schiene (9,10) hängenden, entlang der Schiene transportierten Trolleys (11-14), die von den Haken (10) übergriffene Tragstangen (15) aufweisen, mit wenigstens einer Abwurfstange (5) abfallenden Verlaufs, die mit ihrem oberen Ende seitlich an die Bewegungsbahn der Trolley-Tragstangen (15) angrenzt, und über die das Gut unter Einfluß der Schwerkraft abrutscht, und mit einer Übernahmeeinrichtung (6) zur Übernahme des Guts von den transportierten Trolleys (11-14), die einen Übernahmefinger (30) umfaßt, der sich an das obere Ende (5a) der Abwurfstange (5) anschließt, in einer Gut-Übernahmestellung an die Tragstange (15) des jeweils in einer Übernahmeposition befindlichen Trolleys, die Haken (20) untergreifend, anstellbar ist und einen ansteigenden Rampenabschnitt (35) aufweist, durch den auf diesen auflaufende Haken (20) von der Tragstangen (15) abgezogen werden,
dadurch **gekennzeichnet**, daß der Finger (30) an einem um die Abwurfstangenlängsachse drehbaren Anschlußteil (6a, 6b, 6c, 31) der Abwurfstange (5) ausgebildet ist und einen gekrümmten Verlauf derart aufweist, daß seine Fingerspitze (32) durch Drehen des Anschlußteils (6a, 6b, 6c, 31) zwischen der Gut-Übernahmestellung, in der sie an der Trolley-Tragstange (15) anstehend unter dem Zenit der Krümmung angeordnet ist, und einer Gut-Weiterleitstellung derart verdrehbar ist, daß sie von der Trolley-Tragstange (15) abgerückt über der Krümmung angeordnet ist, und daß eine an der Trolley-Tragstange (15) angreifende Rückhalteinrichtung (60) vorgesehen ist, mit der die Kleidungsstücke solange von der Überahmeposition an der Trolley-Tragstange (15) ferngehalten werden, bis der Finger in die Gut-Übernahmestellung an die Trolley-Tragstange (15) geschwenkt ist.

2. Hängefördervorrichtung nach Anspruch 1,
dadurch **gekennzeichnet**, daß die Fingerspitze (32) beim Verschwenken des Fingers (30) aus der Gut-Übernahmestellung in die Gut-Weiterleitstellung eine ansteigende, über dem Zenit der Fingerkrümmung endende Bewegungsbahn durchläuft.

3. Hängefördervorrichtung nach Anspruch 1 oder 2,
dadurch **gekennzeichnet**, daß das Anschlußteil eine Hülse (31) ist, die auf dem trolleystangenseitigen Ende der Abwurfstange (5) schwenkbar gelagert ist und trolleystangenseitig den Finger (30) trägt.

4. Hängefördervorrichtung nach Anspruch 3,
dadurch **gekennzeichnet**, daß der Finger (30) einstückig mit der Hülse (31) ausgebildet ist.

5. Hängefördervorrichtung nach Anspruch 3 oder 4,
dadurch **gekennzeichnet,** daß Hülse (31) und Finger (30) im wesentlichen zylindrisch ausgebildet sind.

6. Hängefördervorrichtung nach einem oder mehreren der Ansprüche 2 bis 5,
dadurch **gekennzeichnet**, daß die Spitze (32) des Fingers (30) verrundet ausgebildet ist.

7. Hängefördervorrichtung nach einem oder mehreren der Ansprüche 2 bis 6,
dadurch **gekennzeichnet**, daß der Finger (30) seitlich versetzt zur Mittenlängsachse der Hülse (31) so angeordnet ist, daß eine Außenkonturlinie des Fingers (30) in Verlängerung einer Mantellinie der zylindrischen Hülse (31) verläuft.

8. Hängefördervorrichtung nach einem oder mehreren der Ansprüche 2 bis 7,
dadurch **gekennzeichnet**, daß für den Schwenkantrieb der Hülse (31) ein Linearantrieb (40, 41) und ein Bewegungswandler (42, 43) zum Umwandeln der linearen Hubbewegung des Linearantriebs in eine Drehbewegung vorgesehen ist.

9. Hängefördervorrichtung nach Anspruch 8,
dadurch **gekennzeichnet**, daß der Bewegungswandler ein an der Hülse (31) und das Betätigungsorgan (41) des Linearantriebs (40, 41) angeschlossenes Gelenk, vorzugsweise ein Kugelgelenk (42) ist.

10. Hängefördervorrichtung nach Anspruch 8 oder 9,
dadurch **gekennzeichnet**, daß der Linearantrieb eine hydraulisch betätigte Zylinderkolben-Anordnung (40, 41) ist.

11. Hängefördervorrichtung nach Anspruch 1 oder 2,
dadurch **gekennzeichnet**, daß das drehbare Anschlußteil eine gebogene Stange (6) ist, die abwurfstangenseitig einen mit der Abwurfstange (5, 5a) fluchtenden geraden Abschnitt (6a) aufweist, einen mittleren Abschnitt (6c), der seitlich versetzt zu dem abwurfstangenseitigen Abschnitt (6a) verläuft und an einen Schwenkantrieb (70) angeschlossen ist, dessen Schwenkachse (A) mit dem geraden abwurfseitigen Abschnitt (6a) fluchtet und der trolleystangenseitig in den Finger (30) übergeht.

12. Hängefördervorrichtung nach Anspruch 11,
dadurch **gekennzeichnet**, daß die Übergabestange (6) und der Finger (30) einteilig ausgebildet sind.

13. Hängefördervorrichtung nach Anspruch 12,
dadurch **gekennzeichnet**, daß der mittlere Stangenabschnitt (6c) gerade sowie parallel zur Schwenkachse verlaufend ausgebildet ist.

14. Hängefördervorrichtung nach einem oder mehreren der Ansprüche 11 bis 13,
dadurch **gekennzeichnet**, daß der Finger (30) im Bereich seiner Spitze (32) einen an die Oberflächenkontur der Trolley-Tragstange (15) angepaßten Oberflächenabschnitt aufweist.

15. Hängefördervorrichtung nach einem oder mehreren der Ansprüche 1 bis 14,
dadurch **gekennzeichnet**, daß die Gut-Rückhalteeinrichtung (60) einen in Richtung seiner Längsachse verstellbaren Stift (61a) umfaßt, der aus einer Ruhestellung seitlich neben der Bewegungsbahn des sich an der Übernahmestation befindenden Trolleys (12) in eine Position unter dieser Bahn verstellbar ist, in der er in die Bewegungsbahn der Haken (20), diese aufstauend, eingreift.

16. Hängefördervorrichtung nach Anspruch 15,
dadurch **gekennzeichnet**, daß der Stift (61a) hydraulisch, zum Beispiel durch eine Zylinder-/Kolbenanordnung (61), antreibbar ist.

## Claims

1. A suspended-conveying apparatus for the suspended conveying of goods suspended on hooks, in particular articles of clothing suspended on clothes hangers, having trolleys (11 - 14) which are suspended on a rail (9, 10), which are transported along the rail and which have carrying rods (15) around which the hooks (20) reach, having at least one discharge rod (5) with a descending gradient, which laterally adjoins the path of motion of the trolley carrying rods (15) by means of its upper end and over which the goods slide down under the influence of gravity, and having a transfer device (6) for transferring the goods from the transported trolleys (11 - 14), which transfer device (6) comprises a transfer finger (30) which adjoins the upper end (5a) of the discharge rod (5), in a goods transfer position can be placed, reaching below the hooks (20), against the carrying rod (15) of the respective trolley, the latter being in a transfer position, and has an ascending ramp section (35) which allows hooks (20) running up onto it to be drawn off the carrying rods (15), characterized in that the finger (30) is constructed on a connection part (6a, 6b, 6c, 31) of the discharge rod (5), rotatable about the longitudinal axis of the discharge rod, and has a curved course such that its finger tip (32) can be turned by rotating the connection part (6a, 6b, 6c, 31) between the goods transfer position in which the finger tip is arranged placed against the trolley carrying rod (15) below the zenith of the curvature and a goods passing-on position such that it is arranged moved away from the trolley carrying rod (15) above the curvature, and in that there is provided a retaining device (60) which grips the trolley carryingrod (15) and by means of which the articles of clothing are held away from the transfer position on the trolley carrying rod (15) until the finger has pivoted into the goods transfer position against the trolley carrying rod (15).

2. A suspended-conveying apparatus according to Claim 1, characterized in that when the finger (30) pivots out of the goods transfer position into the goods passing-on position the finger tip (32) follows an ascending path of motion which ends above the zenith of the curvature of the finger.

3. A suspended-conveying apparatus according to Claim 1 or 2, characterized in that the connection part is a sleeve (31) which is pivotally mounted on the carrying-rod end of the discharge rod (5) and carries the finger (30) at the carrying-rod end.

4. A suspended-conveying apparatus according to Claim 3, characterized in that the finger (30) is constructed in one piece with the sleeve (31).

5. A suspended-conveying apparatus according to Claim 3 or 4, characterized in that the sleeve (31) and the finger (30) are constructed to be substantially cylindrical.

6. A suspended-conveying apparatus according to one or more of Claims 2 to 5, characterized in that the tip (32) of the finger (30) is constructed to be rounded.

7. A suspended-conveying apparatus according to one or more of Claims 2 to 6, characterized in that the finger (30) is arranged laterally offset with respect to the centre longitudinal axis of the sleeve (31) such that an outer contour line of the finger (30) runs in the manner of an extension to an outer surface line of the cylindrical sleeve (31).

8. A suspended-conveying apparatus according to one or more of Claims 2 to 7, characterized in that, for the pivotal driving of the sleeve (31), a linear drive (40, 41) and a motion converter (42, 43) for converting the linear lifting motion of the linear drive into a rotary motion is provided.

9. A suspended-conveying apparatus according to Claim 8, characterized in that the motion converter is a joint connected to the sleeve (31) and the actuating member (41) of the linear drive (40, 41), preferably a ball-and-socket joint (42).

10. A suspended-conveying apparatus according to Claim 8 or 9, characterized in that the linear drive is a hydraulically actuated cylinder-and-piston arrangement (40, 41).

11. A suspended-conveying apparatus according to Claim 1 or 2, characterized in that the rotary connection part is a bent rod (6) which has at the discharge-rod end a straight section (6a) which is flush with the discharge rod (5, 5a), a central section (6c) which runs laterally offset with respect to the section (6a) of the discharge-rod end and is connected to a pivotal drive (70), whereof the axis of pivoting (A) is flush with the straight section (6a) at the discharge end and which merges at the trolley-rod end into the finger (30).

12. A suspended-conveying apparatus according to Claim 11, characterized in that the transfer rod (6) and the finger (30) are constructed in one piece.

13. A suspended-conveying apparatus according to Claim 12, characterized in that the central rod section (6c) is constructed to run straight and parallel to the axis of pivoting.

14. A suspended-conveying apparatus according to one or more of Claims 11 to 13, characterized in that the finger (30) has, in the region of its tip (32), a surface section matched to the surface contour of the trolley carrying rod (15).

15. A suspended-conveying apparatus according to one or more of Claims 1 to 14, characterized in that the goods retaining device (60) comprises a pin (61a) which is adjustable in the direction of its longitudinal axis and is adjustable from a rest position laterally next to the path of motion of the trolley (12) at the transfer station to a position below this path, in which it engages in the path of motion of the hooks (20), retaining the latter.

16. A suspended-conveying apparatus according to Claim 15, characterized in that the pin (61a) can be driven hydraulically, for example by a cylinder-and-piston arrangement (61).

## Revendications

1. Dispositif de transport suspendu pour le transport en suspension d'articles suspendus à des crochets, en particulier d'articles d'habillement pendant sur des cintres à vêtement, comportant des chariots (11-14) suspendus à un rail (9,10) et déplacés le long de ce rail, ces chariots comportant des barres supports (15) auxquelles sont accrochés les crochets, au moins une barre de déchargement (5) inclinée vers le bas, qui se termine, à son extrémité supérieure, à l'endroit du trajet des barres supports (15) des chariots et sur laquelle glisse chaque article sous l'influence de la pesanteur, et un dispositif de réception (6) pour la réception de l'article à partir des chariots de transport (11-14), ce dispositif comportant un doigt de réception (30) qui est raccordé à l'extrémité supérieure (5a) de la barre de déchargement (5), qui peut être appliqué, dans une position de réception des articles, sur la barre support (15) de chaque chariot se trouvant dans une position de réception, en s'engageant sous les crochets (20), et qui présente un tronçon formant rampe ascendante (35), rampe par l'intermédiaire de laquelle les crochets (20) se trouvant sur cette rampe sont dégagés des barres supports (15), caractérisé en ce que le doigt (30) est formé sur une pièce de raccordement (6a,6b,6c,31) de la barre de déchargement (5), pouvant tourner autour de l'axe longitudinal de cette barre de déchargement, et il présente un profil courbe tel que la pointe (32) de ce doigt puisse être tournée, par suite d'une rotation de la pièce de raccordement (6a,6b,6c,31), entre la position de réception des articles dans laquelle cette pointe est située en appui sur la barre support (15), en dessous du sommet de la partie courbe, et une position de transmission des articles de telle façon qu'elle soit alors située au-dessus de la partie courbe en étant écartée de la barre de suspension (15) du chariot, et en ce qu'il est prévu un dispositif de retenue (60), venant en contact avec la barre de suspension (15) du chariot et au moyen duquel les articles d'habillement sont maintenus à l'écart de la position de transfert, sur la barre de suspension (15) du chariot, jusqu'à ce que le doigt ait pivoté dans la position de réception des articles, au contact de la barre de suspension (15) du chariot.

2. Dispositif de transport suspendu suivant la revendication 1 caractérisé en ce que la pointe (32) du doigt, lors du pivotement du doigt (30) à partir de la position de réception des articles jusqu'à la position de transmission des articles, suit un trajet montant se terminant au-dessus du sommet de la partie courbe du doigt.

3. Dispositif de transport suspendu suivant l'une quelconque des revendications 1 ou 2 caractérisé en ce que la pièce de raccordement est un manchon (31) qui est monté à rotation sur la partie extrême de la barre de déchargement (5) située à côté de la barre de suspension (15) du chariot et qui porte le doigt (30) du côté de la barre de suspension (15) du chariot.

4. Dispositif de transport suspendu suivant la revendication 3 caractérisé en ce que le doigt (30) forme une scule pièce avec le manchon (31).

5. Dispositif de transport suspendu suivant l'une quelconque des revendications 3 ou 4 caractérisé en ce que le manchon (31) et le doigt (30) ont une forme essentiellement cylindrique.

6. Dispositif de transport suspendu suivant l'une quelconque des revendications 2 à 5 caractérisé en ce que la pointe (32) du doigt (30) est arrondie.

7. Dispositif de transport suspendu suivant l'une quelconque des revendications 2 à 6 caractérisé en ce que le doigt (30), décalé latéralement par rapport à l'axe longitudinal du manchon (31), est disposé de telle façon qu'une ligne du profil extérieur du doigt (30) s'étende dans le prolongement d'une génératrice du manchon cylindrique (31).

8. Dispositif de transport suspendu suivant l'une quelconque des revendications 2 à 7 caractérisé en ce qu'il est prévu, pour l'entraînement en rotation du manchon (31), un dispositif d'entraînement à mouvement linéaire (40,41) et un dispositif de transformation de mouvement (42,43) afin de transformer le mouvement alternatif linéaire du dispositif d'entraînement linéaire en un mouvement de rotation.

9. Dispositif de transport suspendu suivant la revendication 8 caractérisé en ce que le dispositif de transformation de mouvement est une articulation raccordée au manchon (31) et à l'organe d'actionnement (41) du dispositif d'entraînement linéaire (40,41) et cette articulation est constituée avantageusement par un joint sphérique (42).

10. Dispositif de transport suspendu suivant l'une quelconque des revendications 8 ou 9 caractérisé en ce que le dispositif d'entraînement linéaire est un vérin à cylindre et piston (40,41) actionné hydrauliquement.

11. Dispositif de transport suspendu suivant l'une quelconque des revendications 1 ou 2 caractérisé en ce que la pièce de raccordement rotative est une barre courbée (6) qui présente, du côté de la barre de déchargement, un tronçon rectiligne (6a) aligné avec la barre de déchargement (5,5a), un tronçon médian (6c) qui s'étend en étant décalé latéralement par rapport au tronçon (6a) situé du côté de la barre de déchargement, qui est raccordé à un dispositif d'entraînement en rotation (70) dont l'axe de rotation (A) coïncide avec celui du tronçon rectiligne (6a) situé du côté de la barre de dégagement et qui se raccorde au doigt (30), du côté de la barre de suspension (15) du chariot.

12. Dispositif de transport suspendu suivant la revendication 11 caractérisé en ce que la barre de transfert (6) et le doigt (30) forment une seule pièce.

13. Dispositif de transport suspendu suivant la revendication 12 caractérisé en ce que le tronçon médian (6c) de la barre de transfert est rectiligne et il s'étend parallèlement à l'axe de rotation.

14. Dispositif de transport suspendu suivant l'une quelconque des revendications 11 à 13 caractérisé en ce que le doigt (30) présente, dans la zone de sa pointe (32), un tronçon de surface adapté au profil de la surface de la barre de suspension (15) du chariot.

15. Dispositif de transport suspendu suivant l'une quelconque des revendications 1 à 14 caractérisé en ce que le dispositif (60) de retenue des articles comporte une tige (61a) réglable dans la direction de son axe longitudinal et qui peut être déplacée à partir d'une position de repos, située latéralement à côté du trajet de déplacement du chariot (12) se trouvant au poste de réception, jusqu'à une position située en dessous de ce trajet et dans laquelle cette tige fait saillie sur le trajet du déplacement des crochets (20), en provoquant l'accumulation de ceux-ci.

16. Dispositif de transport suspendu suivant la revendication 15 caractérisé en ce que la tige (61a) peut être entraînée hydrauliquement, par exemple par l'intermédiaire d'un vérin à cylindre-piston (61).
